# EUROPÄISCHE PATENTSCHRIFT

(11) **EP 3 407 044 B1**
(45) Veröffentlichungstag und Bekanntmachung des Hinweises auf die Patenterteilung: **04.03.2020**
(21) Anmeldenummer: 18173183.7
(22) Anmeldetag: 18.05.2018
(51) Int. Cl.: G01L 3/10

(54) **DREHMOMENTSENSOR MIT MATHEMATISCH GLATTEN KLAUEN**
TORQUE SENSOR WITH MATHEMATICALLY SMOOTH CLAWS
CAPTEUR DE COUPLE DE ROTATION À COURBES MATHÉMATIQUEMENT LISSES

(30) Priorität: 23.05.2017 DE 102017111305
(43) Veröffentlichungstag der Anmeldung: 28.11.2018
(73) Patentinhaber: Bourns, Inc., Riverside, CA 92507 (US)
(72) Erfinder: Berner, Sebastian, 81371 München (DE); Pichler, Benno, 85653 Aying (DE); Sommer, Andreas, 83209 Prien (DE)
(74) Vertreter: von Bülow & Tamada

(56) Entgegenhaltungen:
- EP-A1- 2 592 404
- EP-A1- 2 808 664

## Beschreibung

Die vorliegende Erfindung betrifft einen Stator zum Führen eines in einer Umgangsrichtung um eine Rotationsachse ortsabhängigen Magnetfeldes und einen Drehmomentsensor mit dem Stator.

Aus der JPH03-048714U, der FR 2872902 B1 und der DE 102 22 118 B4 ist je ein Stator für einen Drehmomentensensor zum Führen eines in einer Umgangsrichtung um eine Rotationsachse ortsabhängigen Magnetfeldes bekannt, umfassend einen um die Rotationsachse umlaufenden ersten Statorring und einen um die Rotationsachse umlaufenden zweiten Statorring, der konzentrisch zum ersten Statorring angeordnet ist, wobei der erste und zweite Statorring umlaufend um die Rotationsachse und in Umfangsrichtung zueinander beabstandet angeordnete und wenigstens auf einer Verzahnungsaxialebene ineinander eingreifende Klauen aufweisen, die über einen Luftspalt voneinander getrennt sind, so dass wenn das Magnetfeld in der Verzahnungsaxialebene angeordnet ist, das Magnetfeld in Abhängigkeit einer relativen Winkellage über die Klauen zu den Statorringen geleitet wird. In der JPH03-048714U weisen die Klauen über die Umgangsrichtung betrachtet die Kontur von Rechtecken auf. In der FR 2872902 B1 weisen die Klauen über die Umgangsrichtung betrachtet die Kontur von Trapezen auf. In der DE 102 22 118 B4 über die Umgangsrichtung betrachtet die Kontur von sägezahnförmigen Dreiecken auf.

Aus den Druckschriften EP 2 592 404 A1 und EP 2 808 664 A1 ist je ein Stator gemäß dem Oberbegriff des geltenden Anspruchs 1 bekannt.

Es ist Aufgabe der Erfindung, die bekannten Statoren für Drehmomentensensoren zu verbessern.

Gemäß einem Aspekt der Erfindung, umfasst ein Stator zum Führen eines in einer Umgangsrichtung um eine Rotationsachse ortsabhängigen Magnetfeldes einen um die Rotationsachse umlaufenden ersten Statorring und einen um die Rotationsachse umlaufenden zweiten Statorring, der konzentrisch zum ersten Statorring angeordnet ist, wobei der erste und zweite Statorring umlaufend um die Rotationsachse und in Umfangsrichtung zueinander beabstandet angeordnete und wenigstens auf einer Verzahnungsaxialebene ineinander eingreifende Klauen aufweisen, die über einen Luftspalt voneinander getrennt sind, so dass wenn das Magnetfeld in der

Verzahnungsaxialebene angeordnet ist, das Magnetfeld in Abhängigkeit einer relativen Winkellage über die Klauen zu den Statorringen geleitet wird. Erfindungsgemäß besitzt jede Klaue über die Umgangsrichtung betrachtet die Kontur einer mathematisch glatten Kurve.
Der Erfindung liegt die Überlegung zugrunde, dass sich ein Ausgangssignal eines Drehmomentensensor in einer Ruhelage ohne Drehmomenteinwirkung eigentlich nicht verändern sollte. Allerdings zeigt sich, dass dies bei der Applikation des Drehmomentensensors gemäß dem Oberbegriff des geltenden Anspruchs 1 in einem Fahrzeug zur Erfassung eines Lenkmomentes nicht so ist. Im Fahrzeug wird das Lenkmoment normalerweise über eine erste Lenkwelle aufgenommen, die das Lenkmoment über ein tordierbares Torsionselement auf eine zweite Lenkwelle überträgt. Je größer die Torsion des Torsionselementes ist, desto größer ist das auf die Lenkwellen wirkende Lenkmoment. Der Drehmomentensensor erfasst die Torsion des Torsionselementes und gibt das Ausgangssignal in Abhängigkeit der Torsion aus. Werden die beiden Lenkwellen allerdings starr, also nicht tordierbar, miteinander verbunden, so sollte sich das Ausgangssignal des Drehmomentensensors auch dann nicht verändern, wenn die beiden Lenkwellen gedreht werden.
Untersuchungen zeigen allerdings, dass die eingangs genannten Drehmomentensensoren allesamt ihr Ausgangssignal mehr oder weniger periodisch verändern, selbst wenn die Lenkwellen gedreht werden. Das Ausgangssignal verändert sich unter der zuvor genannten Bedingung, dass die Lenkwellen starr verbunden sind und gedreht werden, mit einem Spitze-zu-Spitze Abstand, der bei trapezoid ausgeführten Klauen besonders hoch ist. Allerdings ist der Spitze-zu-Spitze Abstand auch bei auch bei den anderen Klauen-Formen deutlich erkennbar. Ein derartiges Verhalten des Ausgangssignal geht als Fehler in die Lenkmomentenerfassung ein.
Dem angegebenen Stator liegt die Erkenntnis zugrunde, dass die eingangs genannten Drehmomentensensoren alle Statoren aufweisen, in denen die Klauen aus einer radialen Perspektive betrachtet Ecken besitzen. Demgegenüber wird mit dem angegebenen Stator vorgeschlagen, die Klauen aus der radialen Perspektive betrachtet frei von Ecken auszuführen, so dass die Klauen über die Umgangsrichtung betrachtet die Kontur einer mathematisch glatten Kurve besitzen. Untersuchungen an Drehmomentensensoren mit derart aufgebauten Statoren haben gezeigt, dass sich der zuvor genannte Spitze-zu-Spitze Abstand im Falle zweier starr verbundener und gedrehter Lenkwellen teilhalbieren lässt, was die Zuverlässigkeit der Lenkmomentenerfassung deutlich steigert.
Erfindungsgemäß weist jede Klaue einen Sockel auf, über dem auf dem jeweiligen Statorring ein Kopf getragen ist, der in Umfangsrichtung gesehen kleiner ist, als der Sockel. Durch den breiteren Sockel wird der magnetische Fluss zwischen den Zähnen genauso gut übertragen, wie bei Zähnen mit einem trapezförmigen Design, allerdings mit einem deutlich kleineren Spitze-zu-Spitze Abstand im Ausgangssignal im Falle starr verbundener gedrehter Lenkwellen.

Erfindungsgemäß laufen in jeder Klaue der Sockel und der Kopf in einem Übergangsbereich mit einer Krümmung ineinander, die ausgehend von einer Sockelkrümmung negativ ist. Auf diese Weise können die Klauen beim axialen Ineinandergreifen sehr nahe aneinander herangeführt werden, so dass der Luftspalt zwischen den Klauen klein ausgeführt werden kann. Je kleiner der Luftspalt ausgeführt wird, desto geringer ist das magnetische Streufeld.

Erfindungsgemäß sind die Sockelkrümmung und Krümmung des Übergangsbereiches betragsmäßig gleich groß. Auf diese Weise ist der Luftspalt zwischen den Klauen konstant.
In einer bevorzugten Weiterbildung des angegebenen Stators besitzt der Kopf in Umfangsrichtung gesehen eine Ausdehnung, die zwischen einem Viertel und drei Viertel, insbesondere einer Hälfte einer Ausdehnung des Sockels in Umfangsrichtung beträgt. Mit diesen Werten konnten im Falle starr verbundener gedrehter Lenkwellen Ausgangssignale mit sehr geringen Spitze-zu-Spitze Abständen erreicht und so Messfehler deutlich reduziert werden.
In einer anderen Weiterbildung des angegebenen Stators sind der Sockel und der Kopf bereichsweise kreisförmig oder oval ausgebildet. Diese Klauen-Formen lassen sich leicht realisieren.
In einer noch anderen Weiterbildung des angegebenen Stators sind die Klauen auf jedem Statorring in Umfangsrichtung zueinander achsensymmetrisch angeordnet. Alternativ oder zusätzlich können die Klauen zwischen den Statorringen in Umfangsrichtung zueinander punktsymmetrisch angeordnet sein. Durch die Symmetrie verhält sich der Drehmomentensensor mit dem angegebenen Stator unabhängig davon, in welche Richtung er gedreht wird, gleich.

In einer noch weiteren Weiterbildung des angegebenen Stators stehen die Kanten jeder Klaue auf einer Ebene, in der ihr jeweiliger Statorring liegt, rechtwinklig. Auf diese Weise kann die Breite des Sockels gegenüber dem verjüngten Kopf über eine gewisse axiale Höhe gehalten werden.

Gemäß einem weiteren Aspekt der Erfindung umfasst ein Sensor zur Erfassung eines Drehmoments zwischen einer ersten Welle und einer zweiten Welle, die über einen Torsionsstab miteinander verbundenen sind einen der angegebenen und mit der ersten Welle ortsfest verbindbaren Stator, einen mit der zweiten Welle ortsfest verbindbaren und koaxial zur Rotationsachse angeordneten Magnetfeldgeber zum Erzeugen und Einspeisen des Magnetfeldes in den Stator, und einen Magnetfeldfühler zum Erfassen eines den Stator passierenden Magnetfeldes aus dem Magnetfeldgeber.

Die oben beschriebenen Eigenschaften, Merkmale und Vorteile dieser Erfindung sowie die Art und Weise wie diese erreicht werden, werden verständlicher im Zusammenhang mit der folgenden Beschreibung der Ausführungsbeispiele, die im Zusammenhang mit der Zeichnung näher erläutert werden. Es zeigen:
Fig. 1 schematisch eine perspektivische Ansicht eines Fahrzeuges mit einem Lenksystem,
Fig. 2a schematisch eine Explosionsansicht eines Drehmomentensensors für das Lenksystem aus Fig. 1,
Fig. 2b schematisch eine perspektivische Schnittansicht eines Drehmomentensensors aus Fig. 2a,
Fig. 3 schematisch eine perspektivische Ansicht eines Stators aus dem Drehmomentsensor der Figs. 2a und 2b,
Fig. 4 eine Kurve eines Ausgangssignals des Drehmomentensensors der Figs. 2a und 2b über einen Lenkwinkel unter der Annahme, dass Lenkwellen in dem Fahrzeug der Fig. 1 starr miteinander verbunden sind, und
Figs. 5a bis 5c verschiedene Kurven von Ausgangssignalen des Drehmomentensensors aus Fig. 2a und 2b in Abhängigkeit veschiedener Statoren und Differenzwinkel der Lenkwellen.

In den Figuren werden gleiche technische Elemente mit gleichen Bezugszeichen versehen und nur einmal beschrieben. Die Figuren sind rein schematisch und geben vor allem nicht die tatsächlichen geometrischen Verhältnisse wieder.

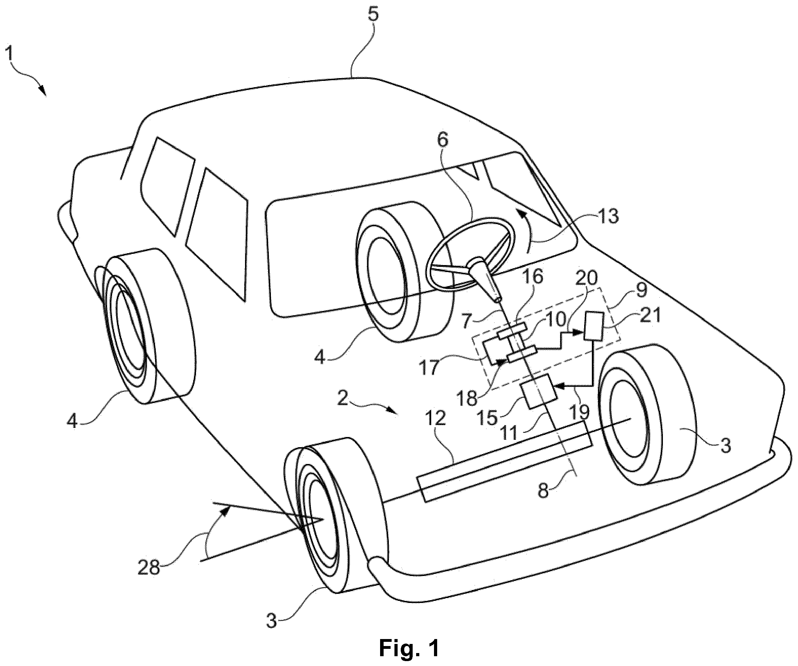

Es wird auf Fig. 1 Bezug genommen, die schematisch eine perspektivische Ansicht eines Fahrzeuges 1 mit einem Lenksystem 2 zeigt.

Das Fahrzeug 1 umfasst im vorliegenden Ausführungsbeispiel ein auf zwei Vorderrädern 3 und auf zwei Hinterrädern 4 getragenes Chassis 5. Die Vorderräder 3 können dabei über das Lenksystem 4 eingeschlagen werden, damit mit dem Fahrzeug 1 eine Kurve gefahren werden kann.

Das Lenksystem 2 umfasst ein Lenkrad 6, das auf eine erste Lenkwelle 7 aufgesetzt ist, die wiederum um eine Rotationsachse 8 drehbar angeordnet ist. Die erste Lenkwelle 7 ist in einen Drehmomentsensor 9 geführt und dort in nicht weiter zu sehender Weise an ein Torsionselement 10 angeschlossen. An dieses Torsionselement 10 ist auf der der ersten Lenkwelle 7 gegenüberliegenden Seite auf der Rotationsachse 8 eine zweite Lenkwelle 11 angeschlossen und mit einem Lenkgetriebe 12 verbunden. Wird das Lenkrad 6 mit einem Lenkmoment 13 gedreht, wird das Lenkmoment entsprechend an das Lenkgetriebe 12 übertragen, welches als Reaktion darauf die Vorderräder 3 für die Kurvenfahrt mit einem Radeinschlag 14 einschlägt.

Der Lenkvorgang kann mit einem Hilfsmotor 15 unterstützt werden, der die zweite Lenkwelle 11 hilfsweise mitdrehen kann. Hierzu wird das Lenkmoment 13 mit dem Drehmomentsensor 9 erfasst. Der Hilfsmotor 15 dreht dann unter anderem in Abhängigkeit des erfassten Lenkmomentes 13 die zweite Lenkwelle 11.

Zur Erfassung des Lenkmomentes 13 umfasst der Drehmomentsensor 9 ein mit der ersten Lenkwelle 7 verbundenes Magnetgeberelement 16, welches ein magnetisches Feld 17 erregt. Der Lenkmomentsensor 13 umfasst ferner ein mit der zweiten Lenkwelle 11 verbundenes Magnetfilter 18, welches das magnetische Feld 17 aus dem Magnetgeberelement 16 in Abhängigkeit einer relativen Winkelstellung 19 der ersten Lenkwelle 7 und damit des Magnetgeberelementes 16 zur zweiten Lenkwelle 11 und damit zum Magnetfilter 18 dämpft und das gedämpfte Magnetfeld 20 an wenigstens einen Magnetfeldfühler 21 weiterleitet. Dieser erfasst das gedämpfte Magnetfeld 20 und gibt basierend darauf die Winkelstellung 19 zwischen den beiden Wellen 7, 11 oder ein davon abhängiges Signal aus. Diese Winkelstellung 19 oder das davon abhängige Signal ist unmittelbar vom zu erfassenden Lenkmoment 13 abhängig, so dass der Hilfsmotor 15 diese Information unmittelbar weiterverarbeiten kann.

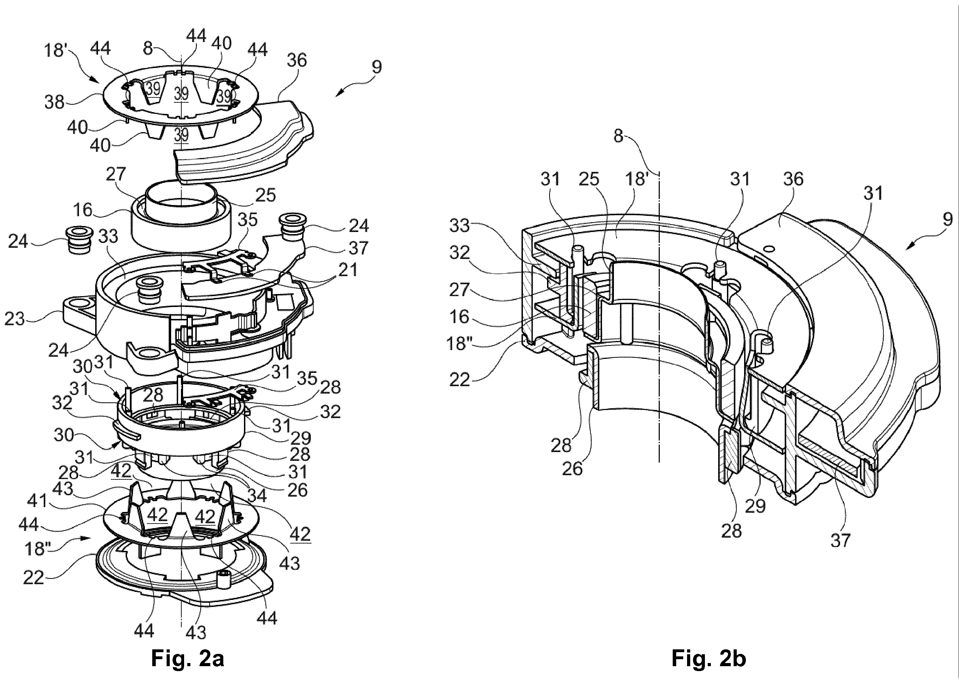

Im Folgenden wird das Magnetfilter 18 auch als Stator 18 bezeichnet, weil es für den nachstehend anhand der Fig. 2a und 2b zu beschreibenden Drehmomentsensors 9 ein gebräuchlicherer Begriff ist.

Der Drehmomentsensor 9 umfasst um die Rotationsachse 8 herum ein über einen Gehäusedeckel 22 verschließbares Gehäuse 23, welches über Schutzelemente 24 an dem Fahrzeug 1 verschraubt werden kann. In dem Gehäuse 23 sind, an der Rotationsachse 8 ausgerichtet, eine erste Lagerbuchse 25 zur kraftschlüssigen Aufnahme der ersten Lenkwelle 7 und eine zweite Lagerbuchse 26 zur kraftschlüssigen Aufnahme der zweiten Lenkwelle 11 aufgenommen.

Dabei ist die erste Lagerbuchse 25 über ein Verbindungsmittel 27, wie beispielsweise ein Kleber, mit dem Magnetfelgeberelement 16 fest verbunden, so dass das Magnetfeldgeberelement 16 fest an der ersten Lenkwelle 7 gehalten wird, wenn diese in die erste Lagerbuchse 25 eingepresst ist.

Die zweite Lagerbuchse 26 ist fest an Klemmelementen 28 eines Koppelstücks 29 gehalten, welches den Stator 18 in einer noch zu beschreibenden Weise fest an die zweite Lagerbuchse 26 anbindet. Hierzu besitzt das Koppelstück 29 im Wesentlichen eine Rohrform. Von den beiden Stirnseiten 30 des Koppelstückes 29 ragen axial Zapfen 31 ab, von denen in Fig. 2a der Übersichtlichkeit halber nicht alle mit einem Bezugszeichen versehen sind. An diesen Zapfen 31 ist der Stator 18 drehfest am Koppelstück 29 gehalten, worauf an späterer Stelle näher eingegangen wird. Ferner weist das Koppelstück 29 matelseitig erste axiale Stützelemente 32 auf, an denen sich das Koppelstück 29 axial an einem Stützring 33 des Gehäuses 23 lagern lässt. Zur axialen Lagerung des Koppelstücks am Gehäusedeckel 22 sind zweite axiale Stützelemente 34 in Form von Füßchen an der zum Gehäusedeckel 22 gerichteten Stirnseite 30 des Koppelstücks 29 ausgebildet.

Wenn im Betrieb des Drehmomentsensors 9 die erste Lenkwelle 7 gedreht und die Drehung über Torsionselement 10 auf die zweite Lenkwelle 11 übertragen wird, drehen sich im Gehäuse 23 das Koppelstück 29 geführt auf dem Stützring 33 und dem Gehäusedeckel 22 gemeinsam mit dem Stator 18 und dem Magnetfelgeberelement 16. Bedingt durch Trägheit der zweiten Lenkwelle 11 kann sich beim Drehen der ersten Lenkwelle 7 diese gegenüber der zweiten Lenkwelle 11 verdrehen. In der Folge verdrehen sich auch das Magnetfelgeberelement 16 und der Stator 18 gegeneinander. Der Drehmomentensensor 9 funktioniert grundsätzlich so, dass er mit dem Stator 18 das Magnetfeld 17 aus dem Magnetfeldgeberelement 16 in Abhängigkeit dieser Verdrehung aufnimmt, und an zwei Magnetfeldfühler 21 weiterleitet, die über Flußleitelemente 35 an den Stator 18 angeschlossen sind. Die Flußleitelemente 35 sind notwendig, weil die Magnetfeldfühler 21 auf einer mit einem Deckel 36 überdeckbaren Leiterplatte 37 ortsfest im Gehäuse 23 angeordnet sind und sich im Lenkvorgang nicht mitdrehen sollen. Daher stehen die Flußleitelemente 35 in Reibkontakt mit dem sich drehenden Stator 18, nehmen so das vom Stator 18 gedämpfte Magnetfeld 20 auf und leiten es an die ortsfesten Magnetfühler 21 weiter.

Das Magnetfeldgeberelement 16 ist aus nicht weiter gezeigten Nord- und Südpolen ausgebildet, die abwechselnd in Umfangsrichtung um die Rotationsachse 8 angeordnet sind. Der Stator 18 besteht aus zwei Statorteilen 18' und 18". Das erste Statorteil 18' besitzt einen Statorring 38, der sich eben in einer Axialebene zur Rotationsachse 8 erstreckt. An einer radialen Innenseite des ersten Statorrings 38 erstrecken sich in Umfangsrichtung um die Rotationsachse 8 mit ersten Umfangsabständen voneinander beabstandet und axial vom ersten Statorring 38 weg erste Klauen 40. Von den ersten Umfangsabständen 39 und den ersten Klauen 40 sind in Fig. 2a der Übersichtlichkeit halber nicht alle mit einem eigenen Bezugszeichen versehen. Das zweite Statorteil 18" besitzt einen Statorring 41, der sich eben in einer Axialebene zur Rotationsachse 8 erstreckt, die verschieden ist von der Axialebene, in der sich der erste Statorring 38. An einer radialen Innenseite des zweiten Statorrings 41 erstrecken sich in Umfangsrichtung um die Rotationsachse 8 mit zweiten Umfangsabständen 42 voneinander beabstandet und axial vom zweiten Statorring 41 weg zweite Klauen 43. Von den zweiten Umfangsabständen 42 und den zweiten Klauen 43 sind in Fig. 2a der Übersichtlichkeit halber nicht alle mit einem eigenen Bezugszeichen versehen.

Um zusammengesetzten Zustand des Drehmomentensensors sind die beiden Statorteile 18', 18" zueinander an der Rotationsachse 8 ausgerichtet, so dass die ersten Klauen 40 axial in die zweiten Umfangsabstände 42 eingreifen, und die zweiten Klauen 43 axial in die ersten Umfangsabstände 39 eingreifen. Dabei sind beide Statorteile 18', 18" über Klammerelemente 44 an den Zapfen 31 des Koppelstückes 29 gehalten, so dass sie sich nicht in Umfangsrichtung um die Rotationsachse 8 zueinander verdrehen können. Von den Klammerelementen 44 sind in Fig. 2a der Übersichtlichkeit halber nicht alle mit einem eigenen Bezugszeichen versehen.

In einer Nullposition, wenn die erste Lenkwelle 7 gegenüber der zweiten Lenkwelle 11 nicht tordiert ist, stehen der radialen Innenseite jeder ersten Klaue 40 des ersten Statorteils 18' eine erste der beiden Polarten des Magnetfeldgeberelement 16 gegenüber - beispielsweise Nordpole. Demgegenüber stehen in der Nullposition der radialen Innenseite jeder zweiten Klaue 43 des zweiten Statorteils 18" die andere der beiden Polarten des Magnetfeldgeberelement 16 gegenüber - beispielsweise Südpole. Das Magnetfeld 17 des Magnetfeldgeberelements 16 tritt in der Nullposition damit nahezu vollständig in die ersten Klauen 40 am ersten Statorteil 18' ein und wird als kaum gedämpftes Magnetfeld 20 über die Flussleitelemente 35 durch die Magnetfeldfühler 21 geleitet.

Werden die beiden Lenkwellen 7, 11 allerdings relativ zueinander verdreht, so werden auch die Pole des Magnetfeldgeberelements 16 gegenüber den Klauen 40, 43 in Umfangsrichtung versetzt, so dass jede Klaue 40, 43 nun sowohl von Nord- als auch von Südpolen des Magnetfeldgeberelements 16 radial überdeckt wird. In diesem Zustand wird ein Teil des Magnetfeldes 17 des Magnetfeldgeberelements 16 an den Klauen 40, 43 kurzgeschlossen, so dass an den Magnetfühlern 21 ein deutlich gedämpftes Magnetfeld 20 ankommt. Je stärker die relative Verdrehung der beiden Lenkwellen 7, 11 ist desto mehr des Magnetfeldes 17 des Magnetfeldgeberelements 16 wird an den Klauen 40, 43 kurzgeschlossen. Daher ist das gedämpfte Magnetfeld 20 unmittelbar von der Verdrehung der beiden Lenkwellen 7, 11 zueinander abhängig.

Allerdings lassen sich an den Magnetfühlern 21 auch Veränderungen des gedämpften Magnetfeldes 20 beobachten, wenn die beiden Lenkwellen 7, 11 zueinander ruhen und nur das Lenkrad 6 gedreht wird. Ein derartiges Verhalten kann simuliert werden, wenn beispielsweise beide Lenkwellen 7, 11 über ein starres Torsionselement 10 miteinander verbunden werden und das Lenkrad 6 gedreht wird. Trotzt relativ zueinander stillstehender Lenkwellen 7, 11 geben die Magnetfeldfühler 21 eine sich verändernde Winkelstellung 19 der beiden Lenkwellen 7, 11 zueinander aus. Dieser Effekt nennt sich Zirkularmodulation und sollte im Betrieb des Drehmomentsensors 9 mit einem tordierbaren Torsionselement 10 so gering wie möglich sein.

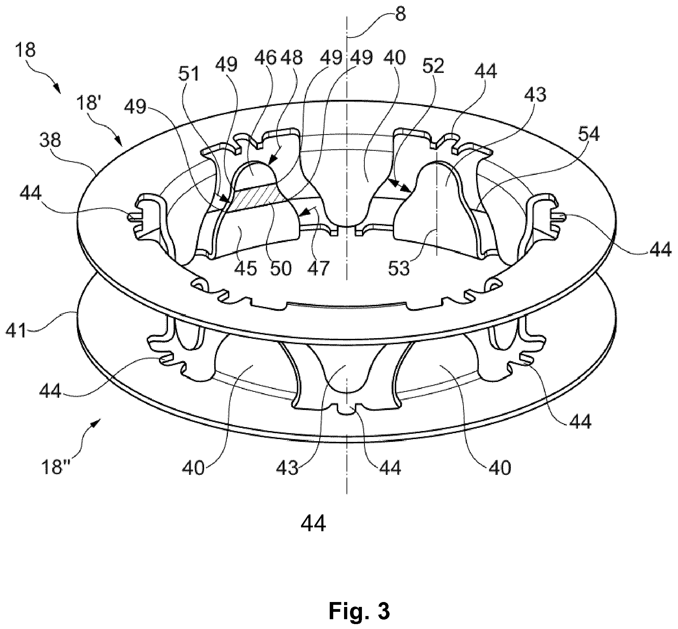

Verschiedene Untersuchungen haben gezeigt, dass die Zirkularmodulation mit einer Kontur der Klauen 40, 43 reduziert werden kann, die über die Umgangsrichtung um die Rotationsachse 8 betrachtet die Kontur einer mathematisch glatten Kurve besitzt. Das heißt, die Klauen 40, 43 sollten kantenfrei sein. Eine mögliche Form dieser Klauen 40, 43 soll nachstehend anhand der Fig. 3 näher erläutert werden.

Jede Klaue 40, 43 besitzt einen Sockel 45 und einen auf den Sockel 45 aufgesetzten Kopf 46. Diese Elemente sind in Fig. 3 der Übersichtlichkeit halber nur an einer der Klauen 40, 43 referenziert. Sowohl der Sockel 45 als auch der Kopf sind grundsätzlich kreisförmig mit einem Sockelradius 47 und einem Kopfradius 48 ausgeführt. Dabei ist der Sockelradius 47 größer gewählt, als der Kopfradius 48, so dass der Sockel 45 in Umfangsrichtung um die Rotationsachse 8 breiter ist, als der Kopf 46. Der Sockelradius 47 ist vorzugsweise doppelt so groß gewählt, wie der Kopfradius 48.

Sowohl der Kopf 46 als auch der Sockel 45 besitzen in Umfangsrichtung gesehen auf jeder Seite je einen Wendepunkte 49. Die so resultierenden vier Wendepunkte 49 grenzen einen Übergangsbereich 50 ab, an dem eine Krümmung der Kontur der jeweiligen Klaue 40, 43 gegenüber der Krümmung im Bereich des Kopfes 46 und des Sockels 45 negativ ist. Auch der Übergangsbereich 50 ist kreisförmig ausgeführt, mit einem Übergangsradius 51, der genauso groß ist, wie der Sockelradius 47. Damit sind die Krümmungen des Übergangsbereiches 50 und des Sockels 45 gleich groß, allerdings mit umgekehrten Vorzeichen. Wenn die so ausgebildeten Klauen 40, 43 ineinander greifen, ist ein sich dazwischen befindlicher Luftspalt 52 in einem Bereich zwischen den beiden Statorringen 38, 41 konstant.

Jede Klaue 40, 43 besitzt eine parallel zur Rotationsachse 8 verlaufende Mittelachse 53, an der die Klauen 40, 43 achsensymmetrisch ausgebildet sind. Ferner sind jeweils benachbarte Klauen 40, 43 in dem in Fig. 3 gezeigten Zustand zu einem Symmetriepunkt 54 punktsymmetrisch angeordnet und ausgebildet, der jeweils in der Mitte des Luftspaltes 52 und mittig zwischen den beiden Statorringen 38, 41 liegt.

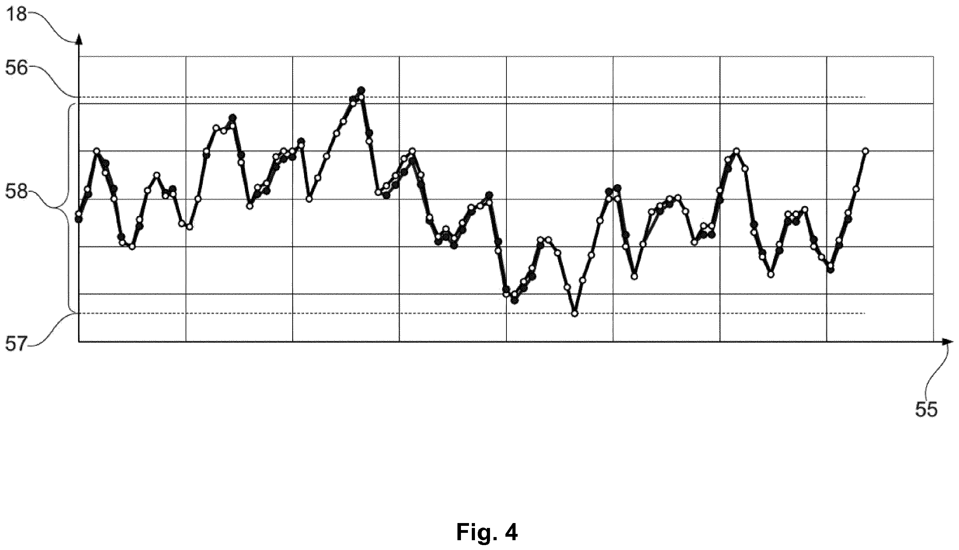

Mit dem in Fig. 3 gezeigten Stator 18 verbaut in dem Drehmomentsensor 9 nach Fig. 2a und 2b wurden Untersuchungen durchgeführt, wie stark sich die Zirkularmodulation auswirkt. Hierzu soll zunächst anhand von Fig. 4 erläutert werden, wie genau sich die Zirkularmodulation im Winkelstellungssignal 18 des Drehmomentsensors 9 bemerkbar macht.

In Fig. 4 ist das Winkelstellungssignal 18 über einen Lenkwinkel 55 aufgetragen, der den Radeinschlag 28 in dem Fahrzeug 1 vorgibt.

Wie in der Fig. 4 zu sehen, bleibt das Winkelstellungssignal 18, also das Signal, dass den Differenzwinkel zwischen den beiden Lenkwellen 7, 11 angibt, beim Drehen des Lenkrades 6 nicht konstant, sondern verändert sich mehr oder weniger periodisch in einem Bereich mit einem oberen Spitzenwert 56 und einem unteren Spitzenwert 57 hin und her. Ein Abstand zwischen den beiden Spitzenwerten 56, 57 wird nachstehend Spitze-zu-Spitze-Abstand 58 genannt.

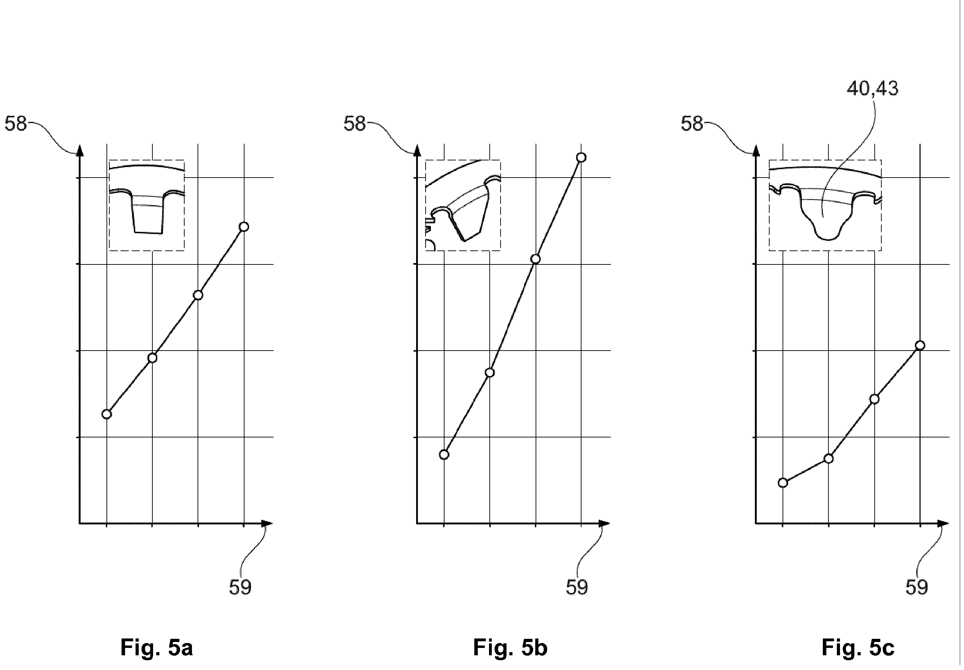

In den Fig. 5a bis 5c sind Untersuchungsergebnisse anhand von Spitze-zu-Spitze-Abstand 58 gezeigt, über eine relative Winkellage 59 der beiden Lenkwellen 7, 11 zueinander aufgetragen ist. Das heißt, die Lenkwellen 7, 11 wurden in einer bestimmen relativen Winkellage 59 fest zueinander angeordnet, so dass auch das Magnetfeldgeberelement 16 und der Stator 18 in der selben relativen Winkellage 59 fest zueinander standen. Anschließend wurde der Spitze-zu-Spitze-Abstand 58 bestimmt, indem ein Diagramm analog zu Fig. 4 aufgetragen wurde. Die Fig. 5a bis 5c stellen dabei die Untersuchungsergebnisse für verschiedene Konturen der Klauen des Stators 18 dar. Sie verdeutlichen keine absoluten Messwerte, sondern zeigen lediglich die Proportionen der Untersuchungsergebnisse zueinander.

In Fig. 5a sind Untersuchungsergebnisse zur rechteckigen Klauenform aufgetragen, wie sie aus der JPH03-048714U bekannt sind. Demgegenüber sind in der Fig. 5b Untersuchungsergebnisse zur trapezförmigen Klauenform aufgetragen, wie sie aus der FR 2872902 B1 bekannt sind. Deutlich zu sehen ist, dass die trapezförmige Klauenform zwar im Bereich geringer relativer Winkellagen 59 der Lenkwellen 7, 11 gegenüber der rechteckigen Klauenform einen deutlich geringeren Spitze-zu-Spitze-Abstand 58 in das Winkelstellungssignal 18 des Drehmomentsensors 9 und damit deutlich geringere Fehler aufgrund der Zirkularmodulation einträgt, die Fehler steigen jedoch gegenüber der rechteckigen Klauenform bei höheren relativen Winkellagen 59 der Lenkwellen 7, 11 deutlich an.

Wie in Fig. 5c zu sehen, bringt die Klauenform der Fig. 3 gegenüber den beiden bekannten Klauenformen über den gesamten Bereich der relativen Winkellage 59 der Lenkwellen 7, 11 einen geringeren Spitze-zu-Spitze-Abstand 58 in das Winkelstellungssignal 18 des Drehmomentsensors 9 ein. Dies bedingt einen deutlich geringeren Fehler bei der Drehmomenterfassung.

## Patentansprüche

1. Stator (18) zum Führen eines in einer Umgangsrichtung um eine Rotationsachse (8) ortsabhängigen Magnetfeldes (17), umfassend:
- einen um die Rotationsachse (8) umlaufenden ersten Statorring (38), und
- einen um die Rotationsachse (8) umlaufenden zweiten Statorring (41), der konzentrisch zum ersten Statorring (38) angeordnet ist, wobei der erste und zweite Statorring (38, 41) umlaufend um die Rotationsachse (8) und in Umfangsrichtung zueinander beabstandet angeordnete und wenigstens auf einer Verzahnungsaxialebene ineinander eingreifende Klauen (40, 43) aufweisen, die über einen Luftspalt (52) voneinander getrennt sind, so dass wenn das Magnetfeld (17) in der Verzahnungsaxialebene angeordnet ist, das Magnetfeld (17) in Abhängigkeit einer relativen Winkellage (59) über die Klauen (40, 43) zu den Statorringen (38, 41) geleitet wird,
- wobei jede Klaue (40, 43) über die Umgangsrichtung betrachtet die Kontur einer mathematisch glatten Kurve besitzt und einen Sockel (45) aufweist, über dem auf dem jeweiligen Statorring (38, 41) ein Kopf (46) getragen ist, der in Umfangsrichtung gesehen kleiner ist, als der Sockel (45),
wobei
- in jeder Klaue (40, 43) der Sockel (45) und der Kopf (46) in einem Übergangsbereich (50) mit einer Krümmung (51) ineinander laufen, die ausgehend von einer Sockelkrümmung (47) negativ ist,
**dadurch gekennzeichnet, dass** die Sockelkrümmung (47) und Krümmung (51) des Übergangsbereiches (50) betragsmäßig gleich groß sind, sodass der Luftspalt (52) zwischen den Klauen (40, 43) konstant ist.

2. Stator (18) nach Anspruch 1 wobei der Kopf (46) in Umfangsrichtung gesehen eine Ausdehnung besitzt, die zwischen einem Viertel und drei Viertel, insbesondere einer Hälfte einer Ausdehnung des Sockels (45) in Umfangsrichtung beträgt.

3. Stator (18) nach einem der Ansprüche 1 bis 2, wobei der Sockel (45) und der Kopf (46) bereichsweise kreisförmig oder oval ausgebildet sind.

4. Stator (18) nach einem der vorstehenden Ansprüche, wobei die Klauen (40, 43) auf jedem Statorring (38, 41) in Umfangsrichtung zueinander achsensymmetrisch (53) angeordnet sind.

5. Stator (18) nach einem der vorstehenden Ansprüche, wobei die Klauen (40, 43) zwischen den Statorringen (38, 41) in Umfangsrichtung zueinander punktsymmetrisch (54) angeordnet sind.

6. Stator nach einem der vorstehenden Ansprüche, wobei die Kanten jeder Klaue (40, 43) auf einer von der Verzahnungsaxialebene verschiedenen Statorsaxialebene, in der ihr jeweiliger Statorring (38, 41) liegt, rechtwinklig stehen.

7. Sensor (9) zur Erfassung eines Drehmoments (13) zwischen einer ersten Welle (7) und einer zweiten Welle (11), die über einen Torsionsstab (10) miteinander verbundenen sind, umfassend:
- einen mit der ersten Welle (7) ortsfest verbindbaren Stator (18) nach einem der vorstehenden Ansprüche,
- einen mit der zweiten Welle (11) ortsfest verbindbaren und koaxial zur Rotationsachse (8) angeordneten Magnetfeldgeber (16) zum Erzeugen und Einspeisen des Magnetfeldes (17) in den Stator (18), und
- einen Magnetfeldfühler (21) zum Erfassen eines den Stator (18) passierenden Magnetfeldes (20) aus dem Magnetfeldgeber (16).

## Claims

1. Stator (18) to guide a location-dependent magnetic field (17) in a circumferential direction around a rotation axis (8), said stator comprising:
- a first stator ring (38) revolving around the rotation axis (8), and
- a second stator ring (41) revolving around the rotation axis (8), which is arranged concentrically with the first stator ring (38).
- the first and second stator ring (38, 41) comprising claws (40, 43) which are arranged so as to revolve around the rotation axis (8) and at a distance from one another in the circumferential direction and engage with one another at least on a toothing axial plane, said claws being separated from one another by an air gap (52) in such a way that, when the magnetic field (17) is arranged in the toothing axial plane, the magnetic field (17) is guided towards the stator rings (38, 41) via the claws (40, 43) according to a relative angular position (59),
**characterized in that**
- each claw (40, 43) has the contour of a mathematically smooth curve when viewed across the circumferential direction,
- wherein each claw (40, 43) has a base (45), above which a head (46) is supported on the respective stator ring (38, 41), said head being smaller than the base (45) when viewed in the circumferential direction,
- wherein in each claw (40, 43), the base (45) and the head (46) merge with one another in a transition region (50) having a curve (51) which is negative starting from a base curve (47),
**characterized in that**
- the base curve (47) and the curve (51) of the transition region (50) have the same dimensions, such that the air gap (52) between the claws (40, 43) is constant.

2. Stator (18) as claim 1, wherein the head (46), when viewed in the circumferential direction, has an extension which is between a quarter and three quarters, in particular half of the extension of the base (45) in the circumferential direction.

3. Stator (18) as claimed in one of the claims 1 to 2, wherein regions of the base (45) and the head (46) have circular or oval designs.

4. Stator (18) as claimed in one of the preceding claims, wherein the claws (40, 43) are arranged axisymmetrically (53) to one another in the circumferential direction on each stator ring (38, 41).

5. Stator (18) as claimed in one of the preceding claims, wherein the claws (40, 43) are arranged point-symmetrically (54) to one another in the circumferential direction between the stator rings (38, 41).

6. Stator as claimed in one of the preceding claims, wherein the edges of each claw (40, 43) are arranged at a right angle to a stator axial plane which is different from the toothing axial plane, in which their respective stator ring (38, 41) is positioned.

7. Sensor (9) to detect a torque (13) between a first shaft (7) and a second shaft (11), which are interconnected by a torsion bar (10), comprising:
- a stator (18) which can be connected in a fixed manner to the first shaft (7) as claimed in one of the preceding claims,
- a magnetic field generator (16) which can be connected in a fixed manner to the second shaft (11), and which is arranged co-axially with the rotation axis (8) to generate and feed the magnetic field (17) into the stator (18), and
- a magnetic field sensor (21) to detect a magnetic field (20) from the magnetic field generator (16) passing the stator (18).

## Revendications

1. Stator (18) pour guider un champ magnétique (17) dépendant de la position dans une direction circonférentielle autour d'un axe de rotation (8), comprenant:
- un premier anneau de stator (38) agencé autour de l'axe de rotation (8), et
- un deuxième anneau de stator (41) agencé autour de l'axe de rotation (8) et disposé concentriquement par rapport au premier anneau de stator (38),
- dans lequel les premier et deuxième anneaux de stator (38, 41) comprennent des griffes (40, 43), agencées pour tourner autour de l'axe de rotation (8) et réparties à distance les unes des autres dans la direction circonférentielle, qui s'engagent les unes dans les autres au moins dans un plan axial des dents, qui sont séparées les unes des autres par un entrefer (52), de telle sorte que, lorsque le champ magnétique (17) est orienté dans le sens du plan axial des dents, le champ magnétique (17) est guidé vers les anneaux de stator (38, 41) par les griffes (40, 43) selon une position angulaire relative (59), dans lequel chaque griffe (40, 43) présente le contour d'une courbe mathématiquement lisse lorsqu'elle est vue dans la direction circonférentielle et comporte une base (45 au-dessus de laquelle une tête (46) est portée sur l'anneau de stator respectif (38, 41) laquelle tête (46) est plus petite que la base (45) lorsqu'elle est vue dans la direction circonférentielle,
dans lequel
- dans chaque griffe (40, 43), la base (45) et la tête (46) se rejoignent dans une zone de transition (50) avec une courbure (51) qui est négative à partir d'une courbure de base (47),
**caractérisé en ce que** la courbure de base (47) et la courbure (51) de la zone de transition (50) sont de valeur égale, de telle sorte que l'entrefer (52) entre les griffes (40, 43) est constant.

2. Stator (18) selon la revendication 1, dans lequel la tête (46) présente un prolongement, vu dans la direction circonférentielle, qui est compris entre un quart et trois quarts, en particulier une moitié, d'un prolongement de la base (45) dans la direction circonférentielle.

3. Stator (18) selon l'une quelconque des revendications 1 à 2, dans lequel la base (45) et la tête (46) ont des formes circulaires ou ovales dans certaines zones.

4. Stator (18) selon l'une quelconque des revendications précédentes, dans lequel les griffes (40, 43) sur chaque anneau de stator (38, 41) sont disposées selon un axe de symétrie (53) les unes par rapport aux autres dans la direction circonférentielle.

5. Stator (18) selon l'une quelconque des revendications précédentes, dans lequel les griffes (40, 43) entre les anneaux de stator (38, 41) sont disposées selon une symétrie ponctuelle les unes par rapport aux autres dans la direction circonférentielle.

6. Stator selon l'une quelconque des revendications précédentes, dans lequel les bords de chaque griffe (40, 43) sont perpendiculaires à un plan axial du stator différent du plan axial de la dent, dans lequel leur anneau de stator respectif est positionné.

7. Capteur (9) pour détecter un couple (13) entre un premier arbre (7) et un second arbre (11) qui sont reliés l'un à l'autre par une barre de torsion (10), comprenant :
- un stator (18) qui peut être relié de manière fixe au premier arbre (7) selon l'une quelconque des revendications précédentes,
- un générateur de champ magnétique (16) qui peut être relié de manière fixe au deuxième arbre (11) et qui est disposé axialement par rapport à l'axe de rotation (8) pour produire et fournir le champ magnétique (17) dans le stator (18), et
- un capteur de champ magnétique (21) pour détecter un champ magnétique (20) passant par le stator (18) à partir du générateur de champ magnétique (16).
